# EUROPÄISCHE PATENTSCHRIFT

(11) **EP 2 047 936 B1**
(45) Veröffentlichungstag und Bekanntmachung des Hinweises auf die Patenterteilung: **31.08.2011**
(21) Anmeldenummer: 08163676.3
(22) Anmeldetag: 04.09.2008
(51) Int. Cl.: B23K 11/00, B23K 20/10, H01R 4/18, H01R 43/02

(54) **Kompaktiervorrichtung zum Kompaktieren von Abschnitten von Litzkabeln**
Device for compacting sections of strands of cables
Dispositif de compactage de sections de brins de cables

(30) Priorität: 11.10.2007 CH 15852007
(43) Veröffentlichungstag der Anmeldung: 15.04.2009
(73) Patentinhaber: Resistronic AG, 5417 Untersiggenthal (CH)
(72) Erfinder: Rohde, Hans-Jörg, 6315 Oberägeri (CH)
(74) Vertreter: Schneider Feldmann AG Patent- und Markenanwälte

(56) Entgegenhaltungen:
- EP-A- 0 177 367
- EP-A- 1 530 271
- US-A- 4 041 766
- US-B1- 6 299 052

## Beschreibung

### Technisches Gebiet

Die vorliegende Erfindung beschreibt eine Kompaktiervorrichtung zum Kompaktieren von Abschnitten von Litzenkabeln gemäß dem Oberbegriff des Anspruchs 1 (siehe, z.B., EP 1 530 271)..

### Stand der Technik

Es sind einige Vorrichtungen und Verfahren zum Verdichten oder Kompaktieren von Litzenkabeln, bestehend aus einer von einer elektrisch isolierenden Hülle umgebenden Mehrzahl von Einzellitzen, bekannt.

Beim Einsatz flexibler Litzen für Verkabelungen hat es sich bewährt, die für den Anschluss vorgesehenen Litzenenden und auch Mittelabschnitte von Litzenkabeln, nicht nur abzuisolieren, sondern auch zur Verbesserung der Anschlussmöglichkeiten zu einem mechanisch festen Anschlussknoten miteinander zu verbinden. Dabei hat es sich bewährt die Verbindung so durchzuführen, dass sich der Anschlussknoten als gasdicht erweist und seiner Umgebung nur seine äusseren Flächen bietet, so dass Oxidationsvorgängen wesentliche Ansatzflächen entzogen sind.

Das Kompaktieren verhindert die besenförmige Ausbreitung der einzelnen Litzen des Litzenkabels. Die Einzellitzen werden beim Kompaktieren zwischen Kompaktierbacken unter Druck zusammengebracht und über Elektroden fliesst ein Stromimpuls durch das zusammengepresste Litzenkabel. Dabei verschmelzen die einzelnen Litzen zu einem kompakten Knoten.

Das US Patent US4867370 von Welter et al. beschreibt eine Vorrichtung zum Ultraschallschweissen, wobei ein Litzenkabel in einen Kompaktierraum eingeführt und darin kompaktiert werden kann. Der Kompaktierraum ist rechteckförmig, wobei die Grösse einstellbar ist. Durch die Annäherung der gegenüberliegenden Begrenzungsflächen des Kompaktierraumes wird das Litzenkabel im Kompaktierraum eingeschlossen und verpresst, wobei der Querschnitt des kompaktierten Litzenkabels je nach Menge der Litzen einen beliebigen rechteckförmigen Querschnitt bilden.

Das europäische Patent EP0723713 beschreibt eine Kompaktiervorrichtung, welche einen in der Höhe und der Breite stufenlos verstellbaren Kompaktierraum aufweist, wobei die Begrenzungsflächen des Kompaktierraumes Abschnitte einer mehrteiligen Gegenelektrode sind und beim Kompaktieren ein erstes Teil und ein zweites Teil eine zwangsgekoppelte Bewegung ausführen. Der Aufbau der Kompaktiervorrichtung ist so ausgestaltet, dass der Kompaktierraum an einer Innenfläche oben geöffnet werden kann, wodurch der abisolierte Mittelabschnitt oder ein Ende des Litzenkabels von oben einführbar ist. Die Begrenzungsflächen können stufenlos angenähert werden, wobei ein fest vorgegebenes Verhältnis zwischen der Höhe und der Breite des Kompaktierraumes eingehalten wird, was zu verschiedenen Querschnitten des kompaktierten Litzenkabels führt. Explizit wird in der Patentschrift auf rechteckförmige Querschnitte hingewiesen und anhand der Konstruktion ist es nicht möglich bei der Kompaktierung jeweils ausschliesslich quadratische Querschnittsflächen zu erreichen.

Aufgrund der nicht reproduzierbaren immer gleichen Höhe und Breite des Kompaktierraumes am Schluss der Kompaktierung, müssen die Masse des kompaktierten Litzenkabels vor einem nachfolgenden Schweissprozess ermittelt werden, um die geeigneten Schweissparameter zu wählen, da diese für nicht quadratische Querschnittsflächen unterschiedlich sind, je nach dem, ob der kompaktierte Knoten mit der breiten oder der schmalen Seitenfläche aufliegt.

Zur Qualitätssicherung der Verschweissung musste somit die Lage des Anschlussknotens der verdichteten Litzenkabelknoten überwacht werden bzw. von Hand oder mittels spezieller Vorrichtungen immer in derselben Lage hochkant oder breitkant aufgelegt werden. Dies verteuert den Herstellungsprozess bei der Verkabelung von Geräten.

Das europäische Patent EP1168528 beschreibt eine Weiterentwicklung des Standes der Technik, wobei die Kompaktiermechanik an die US4867370 angelehnt ist. Eine Rechnereinheit steuert den Kompaktiervorgang, wobei eine gewünschte Breite des Kompaktierraumes einstellbar ist. Auch hier ist nicht offenbart, ob und wie kompaktierte Litzenkabel mit immer annähernd quadratisch geformter Querschnittsfläche herstellbar sind und es wird auch keine Kompaktierung im Endlosbetrieb offenbart, bei welcher ein Litzenkabel dem Kompaktierraum zuführbar ist, so dass Kompaktiervorgänge von abisolierten Mittelabschnitten durchführbar sind. Dies ist aber wünschbar, da so ein endlos Betrieb möglich ist und Litzenkabel im Bereich der kompaktierten Knoten anschliessend durchtrennt werden können.

Die EP1530271 offenbart eine Kompaktiervorrichtung mit geführten Kompaktierbacken, welche einen definierten Kompaktierraum bilden, in welchem ein Litzenkabel kompaktierbar und verschweissbar ist. Zusätzlich zu den Kompaktierbacken sind Elektroden vorgesehen, welche das Verschweissen erlauben. Die Kompaktiervorrichtung gewährleistet keine Verdichtung mit stets quadratischem Querschnitt. Die Ausgestaltung von zusätzlichen Schweisselektroden verkompliziert die Vorrichtung ausserdem.

Aus der EP0177367 erhält der Fachmann Information über eine Kompaktiervorrichtung, welche das Kompaktieren eines Litzenkabels und anschliessendes Kaltpress-Schweissen erlaubt. Vier Kompaktierbacken sind linear relativ zueinander verschiebbar gelagert, sodass der Kompaktierraum veränderbar ist.

Auch die US4041766 offenbart eine Kompaktiervorrichtung, welche zur Verpressung von Litzenkabeln verwendbar ist. Kompaktierbacken werden linear in Richtung Litzenkabel verschoben. Während ein Bedienungsring um die Kompaktierbacken mittels Hebel rotiert wird, werden die Kompaktierbacken linear bewegt.

Damit ein optimales nachfolgendes Verschweissen der Litzenkabel gewährleistet werden kann, ist es von Vorteil, dass die Querschnittsflächen der zusammengepressten Litzenkabel quadratisch sind, denn dann können immer die gleichen Schweissparameter gewählt werden und muss nicht vor jedem Schweissvorgang eine Messung des Litzenkabels und eine Anpassung auf das Litzenkabel stattfinden.

### Darstellung der Erfindung

Die vorliegende Erfindung hat sich zur Aufgabe gestellt eine Kompaktiervorrichtung für Litzenkabel zu schaffen, in welcher mittlere Abschnitte und Endabschnitte des Litzenkabels kompaktierbar sind, wobei die resultierenden kompaktierten Litzenkabelknoten immer eine quadratische Querschnittsfläche aufweisen.

Eine weitere Aufgabe stellt die Möglichkeit dar, die Kompaktierrung des Litzenkabels im Endlosbetrieb auszuführen, wobei das Litzenkabel der Kompaktiervorrichtung im Endlosbetrieb zugeführt wird.

Eine weitere Aufgabe der Erfindung ist die Verschweissung eines kompaktierten Litzenkabels aus beliebigem Material unter anderem aus stahlartigen Materialien mit hoher Materialhärte.

Eine Kompaktiervorrichtung gemäß der Erfindung ist im Anspruch 1 definiert.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
Figur 1a zeigt die Innenfläche einer Bodenplatte einer erfindungsgemässen Kompaktiervorrichtung in einer perspektivischen Ansicht, während
Figur 1b die Innenfläche einer Abdeckplatte in einer perspektivischen Ansicht zeigt.
Figur 2a zeigt die Bodenplatte gemäss Figur 1a, wobei eine Betätigungsscheibe in die Lagermulde der Bodenplatte eingelegt ist, während
Figur 2b die Abdeckplatte gemäss Figur 1b mit eingelegter Betätigungsscheibe.
Figur 3a zeigt Schieberelemente und Kompaktierbacken eingelegt in die Betätigungsscheibe der Figur 2a in einer perspektivischen Ansicht, während Figur 3b die auf der Abdeckplatte liegende Betätigungsscheibe aus Figur 3a aus Sicht von der Bodenplatte in einer perspektivischen Ansicht zeigt.
Figur 4a zeigt eine perspektivische Ansicht der sandwichartig ausgebildeten Kompaktiervorrichtung von oberhalb der Abdeckplatte, während
Figur 4b den umgedrehten Aufbau aus Figur 4a aus Blickrichtung der Bodenplatte zeigt.
Figur 5 zeigt eine Schnittdarstellung der Kompaktiervorrichtung in Offenstellung mit einer maximal möglichen Querschnittsfläche des Kompaktierraums, während
Figur 6 eine Schnittdarstellung der Kompaktiervorrichtung in Betätigungsstellung mit verringerter Querschnittsfläche des Kompaktierraums zeigt.

### Beschreibung

Mit Hilfe der hier offenbarten Kompaktiervorrichtung 1 werden Litzenkabel, bestehend aus einer Mehrzahl von einzelnen, von einander getrennten Litzen, kompaktiert und damit verdichtet. Die Vorrichtung erlaubt eine Kompaktierung eines mittleren Abschnittes eines Litzenkabels, sowie die Kompaktierung des Endabschnittes eines Litzenkabels, wobei der mittlere Abschnitt oder der Endabschnitt vor der Kompaktierung mit geeigneten Mitteln entmantelt werden müssen. Vorrichtungen zum Entmanteln, also der Entfernung der elektrisch isolierenden Hülle des Litzenkabels sind hinreichend bekannt und sind nicht Teil der vorliegenden Erfindung, weshalb auf diese hier nicht näher eingegangen wird.

Eine erste Kompaktierbacke 8, eine zweite Kompaktierbacke 9, eine dritte Kompaktierbacke 10 und eine vierte Kompaktierbacke 11, bilden mit jeweils einem Flächenteil einer zugehörigen Aussenfläche die vier Innenflächen eines Kompaktierraumes 12. Die obere Stirnfläche und die untere Stirnfläche des Kompaktierraumes 12 liegen frei zugänglich und weisen, genau wie die Querschnittsfläche 120, zu jeder Zeit einen quadratischen Querschnitt auf.

Eine zwangsgeführte Bewegung der Kompaktierbacken 8, 9, 10, 11 relativ zueinander gewährleistet, dass der Querschnitt des Kompaktierraumes 12 quadratisch ist. Eine mögliche Ausführungsform der Mechanik, welche die erfindungsgemässe zwangsgeführte Bewegung der Kompaktierbacken ermöglicht, wird weiter unten detailliert erläutert.

Neben einer mechanischen Verpressung des absiolierten Litzenkabels innerhalb des Kompaktierraumes 12 bis zu einer minimal möglichen Querschnittsfläche 120, wird ein elektrischer Stromimpuls durch zwei der Kompaktierbacken genutzt, um das Litzenkabel elektrisch zu verschweissen, wodurch das Material der einzelnen Litzen verschmilzt und ein kompakter Abschnitt des Litzenkabels mit gutem elektrischen Kontakt erreicht wird.

Auf einer Innenseite 20 einer Bodenplatte 2 befindet sich eine Lagermulde 21. In der Bodenplatte 2 ist ein erster Schwenkzapfen 23 und ein zweiter Schwenkzapfen 24 kraft- und/oder formschlüssig senkrecht von der Bodenplatte 2 wegragend ortsfest befestigt. Die Bodenplatte 2 weist eine zentrische Abführbohrung 22 auf, durch welche das kompaktierte Litzenkabel aus der Kompaktiervorrichtung 1 ausführbar ist.

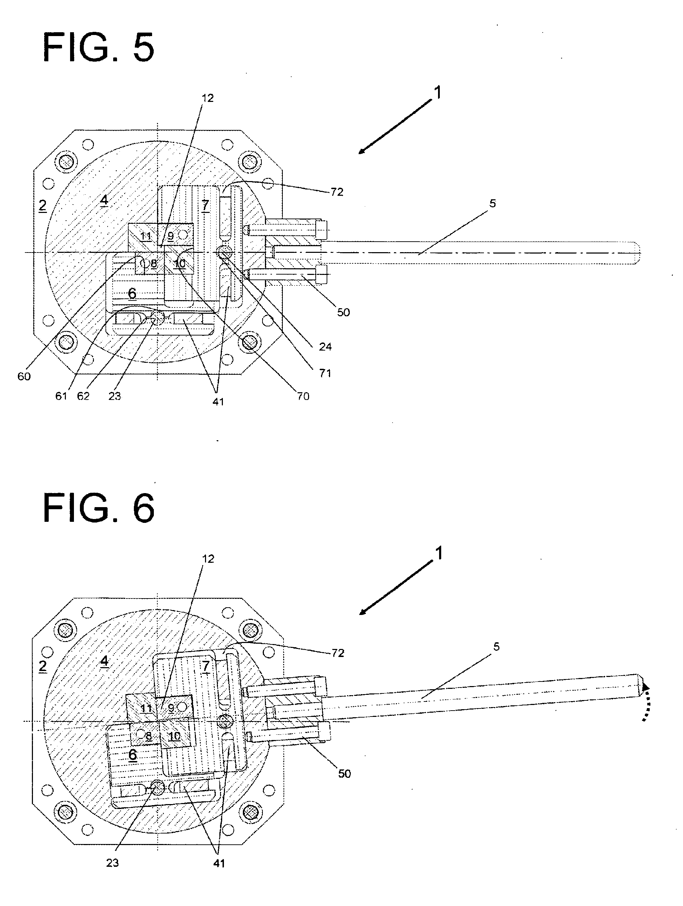

Die Verpressung des Litzenkabels findet durch das Verschwenken einer Betätigungsscheibe 4, welche in der Lagermulde 21 gelagert ist, in eine Betätigungsstellung gemäss Figur 6, durch einen, mittels Befestigungsmitteln 50 an der Betätigungsscheibe 4 befestigten Betätigungsarm 5 statt. Dabei wird die Betätigungsscheibe 4 um eine zentrische virtuelle Drehachse um einen Winkel geschwenkt.

Die Betätigungsscheibe 4 weist eine Scheibenaussparung 40 auf in welcher ein erstes Schieberelement 6 und ein zweites Schieberelement 7 miteinander zwangsgekoppelt schwenkbewegbar gelagert sind.

Das erste Schieberelement 6 weist eine annähernd h-förmige Gestalt auf und ist mit einer ersten Bohrung 62 versehen, durch welche der erste Schwenkzapfen 23 durchgeführt ist. Das erste Schieberelement 6 ist in die Scheibenaussparung 40 eingelassen und dort um den ersten Schwenkzapfen 23 schwenkbewegbar gelagert. In einer ersten Aussparung 60 im ersten Schieberelement 6 ist die erste Kompaktierbacke 8 formschlüssig verbunden eingelassen. Die erste Kompaktierbacke 8 ist linear unbewegbar im ersten Schieberelement 6 eingeklemmt oder eingekeilt fixiert, wodurch eine Bewegung innerhalb des ersten Schieberelementes 6 relativ zum ersten Schieberelementes 6 ausgeschlossen ist.

Das zweite Schieberelement 7 weist, analog zum ersten Schieberelement 6 eine annähernd h-förmige Gestalt auf und ist mit einer zweiten Bohrung 71 versehen, durch welche der zweite Schwenkzapfen 24 durchgeführt ist, so dass das zweite Schieberelement 7 um diesen zweiten Schwenkzapfen 24 schwenkbar, in die Scheibenaussparung 40 der Betätigungsscheibe 4 eingelassen, gelagert ist. Das zweite Schieberelement 7 weist eine dritte Aussparung 70 zur Aufnahme der zweiten Kompaktierbacke 9 und der dritten Kompaktierbacke 10 auf. Die zweite Kompaktierbacke 9 ist linear in der dritten Aussparung 70 unbewegbar eingeklemmt. Die dritte Kompaktierbacke 10 ist derart in der dritten Aussparung 70 gelagert, dass die dritte Kompaktierbacke 10 linear innerhalb der dritten Aussparung 70 verschiebbar ist, wobei eine Aussenfläche der zweiten Kompaktierbacke 9 und eine Aussenfläche der dritten Kompaktierbacke 10 berührend aneinander entlang gleiten.

In einer Tasche der Scheibenaussparung 40, welche vom ersten Schieberelement 6 und vom zweiten Schieberelement 7 beabstandet ist, ist die vierte Kompaktierbacke 11 formschlüssig verbunden in die Betätigungsscheibe 4 klemmend eingelassen, wobei eine Aussenfläche der vierten Kompaktierbacke 11 zu jeder Zeit in Kontakt mit einer Aussenfläche der ersten Kompaktierbacke 8 und der dritten Kompaktierbacke 9 ist. Jeweils ein Teil einer der Aussenflächen jeder der ersten bis vierten Kompaktierbacke 8, 9, 10, 11 bildet jeweils eine Innenfläche des Kompaktierraumes 12. Bei Betätigung des Betätigungsarmes 5 wird die Betätigungsscheibe 4 um eine zentrische virtuelle Drehachse verschwenkt, wobei das erste Schieberelement 6 um eine Drehachse senkrecht durch den ersten Schwenkzapfen 23 und das zweite Schieberelement 7 um eine Drehachse senkrecht durch den zweiten Schwenkzapfen 24 verschwenkt wird.

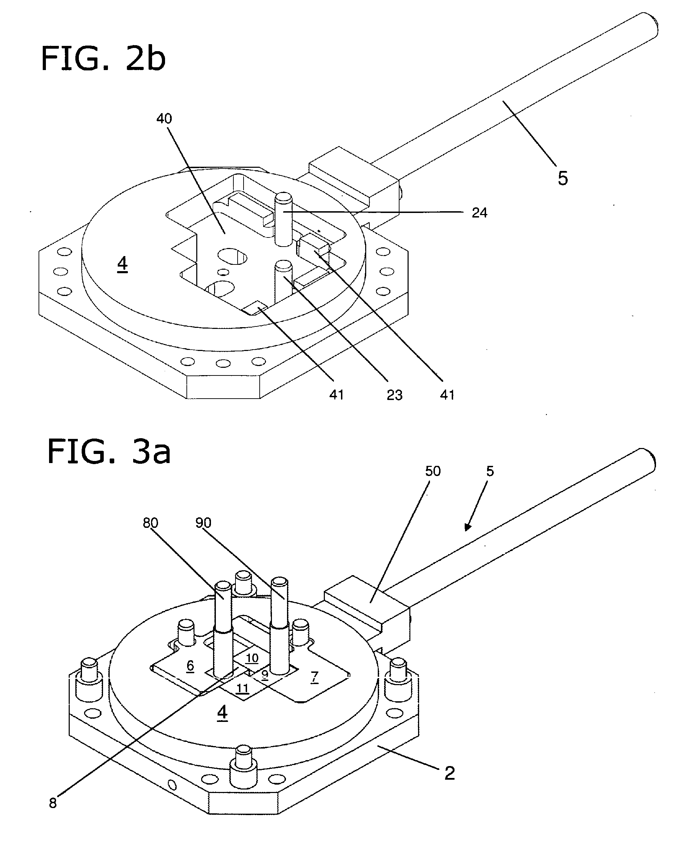

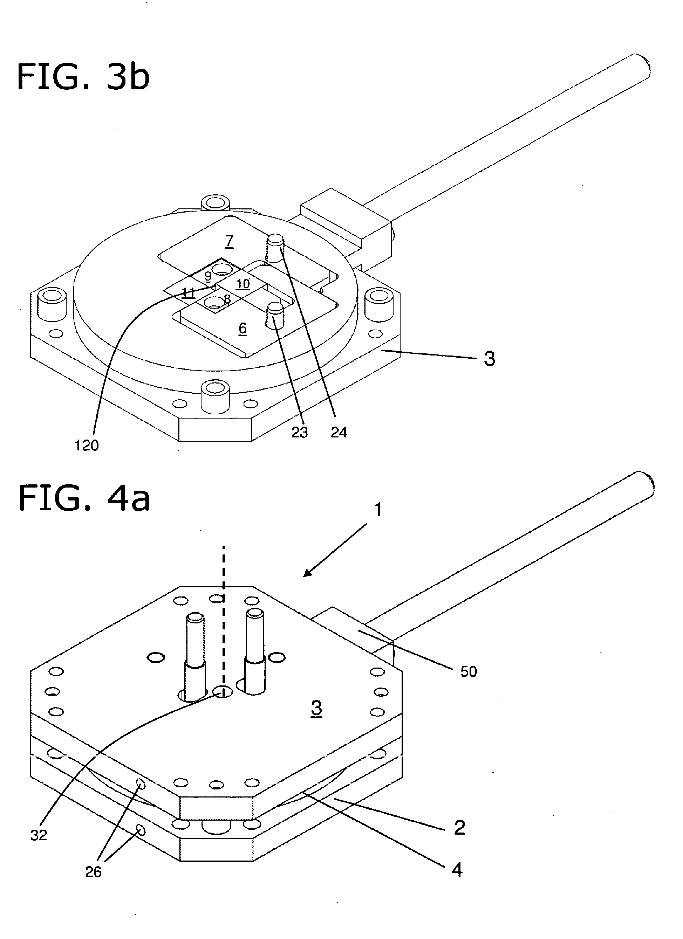

Wie in den Figuren 3a und 3b erkennbar ist, ist das erste Schieberelement 6 mehrlagig ausgebildet und greift teilweise in das zweite Schieberelement 7 ein und umgreift die dritte Kompaktierbacke 10 derart, dass die dritte Kompaktierbacke 10 in Richtung zur zentrischen virtuellen Drehachse der Kompaktiervorrichtung 1 führbar ist. Da die dritte Kompaktierbacke 10 linear bewegbar im zweiten Schieberelement 7 gelagert ist, kann die Querschnittsfläche 120 des Kompaktierraumes 12 verringert werden.

Figur 5 zeigt die Kompaktiervorrichtung in Offenstellung, wobei der Betätigungsarm 5 nicht verschwenkt ist und ein Kompaktierraum 12 mit maximal möglicher Querschnittsfläche 120 resultiert. Das erste Schieberelement 6 liegt innerhalb der Scheibenaussparung 40 am äusseren Rand senkrecht in Richtung des zweiten Schieberelementes 7. Das zweite Schieberelement 7 liegt in der Offenstellung innerhalb der Scheibenaussparung 40 am oberen Rand der Scheibenaussparung 40 an, wodurch eine maximal grosse Querschnittsfläche 120 des Kompaktierraums 12 resultiert.

Figur 6 zeigt einen verschwenkten Betätigungsarm 5 in Betätigungsstellung und die damit verbundene Verschwenkung der Betätigungsscheibe 4 und der Scheibenaussparung 40. Durch die Zwangskopplung des ersten Schieberelementes 6 mit dem zweiten Schieberelement 7 innerhalb der Scheibenaussparung 40, schwenken beide Schierberelemente 6, 7 um die ihnen zugewiesenen Schwenkzapfen 23, 24 bzw. Schwenkachsen. Bei der Verschwenkung des ersten und des zweiten Schieberelementes 6, 7 scheinen sich die Schieberelemente linear zu bewegen. Tatsächlich bewegt sich die Betätigungsscheibe 4 und damit die Scheibenaussparung 40 relativ zu den Schieberelementen 6, 7.

Durch das Verschwenken der beiden Schieberelemente 6, 7 relativ gegeneinander, bewegen sich die Flächenteile der Aussenflächen der Kompaktierbacken 8, 9, 10, 11 in Richtung der zentrischen virtuellen Drehachse, wodurch die Querschnittsfläche des Kompaktierraums verringert wird. Während die erste Kompaktierbacke 8 mit dem ersten Schieberelement 6 und die zweite Kompaktierbacke 9 mit dem zweiten Schieberelement 7 mitgeführt werden, wird die dritte Kompaktierbacke 10 durch den ersten Schieber 6, der ersten Kompaktierbacke 8 folgend in Richtung der zentrischen virtuellen Drehachse mitgeführt. Die vierte Kompaktierbacke 11 bleibt während des Betätigungsvorganges ortsfest und führt nur eine Schwenkbewegung aus.

Damit die Bewegung der Betätigungsscheibe 4 relativ zum ersten Schieberelement 6 und zum zweiten Schieberelement 7 stabilisiert geführt stattfindet, sind Führungsmittel 41 an den Seitenrändern der Scheibenaussparung 40 angeformt. Diese Führungsmittel 41 gewährleisten, dass die relative Verschiebung des ersten Schieberelementes 6 und des zweiten Schieberelementes 7 zwangsgeführt und reproduzierbar durchführbar ist. Eine zweite Aussparung 62 ist im ersten Schieberelement 6 vorgesehen und eine vierte Aussparung 72 ist im zweiten Schieberelement 7 vorgesehen, welche mit den angeformten Führungsmitteln 41 der Scheibenaussparung 40 zusammenwirken. Die Führungsmittel 41 können selbst verständlich auch lösbar an der Betätigungsscheibe 4 befestigt werden.

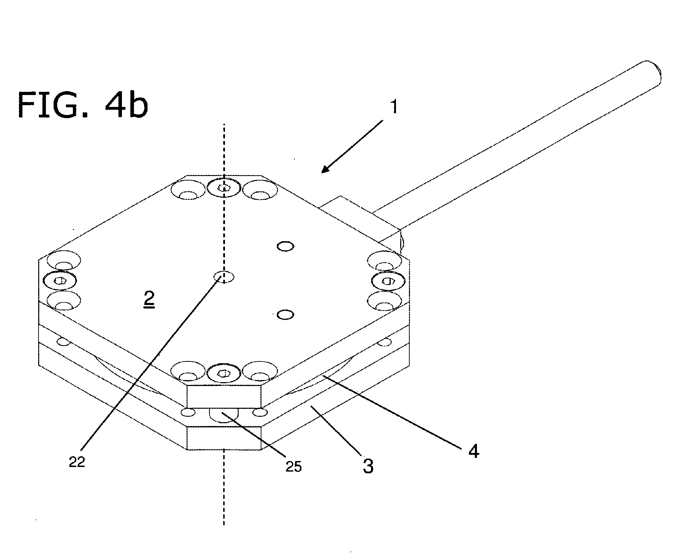

Zur Vervollständigung der Kompaktiervorrichtung 1 ist eine Abdeckplatte 3 auf der, der Bodenplatte 2 abgewandten Seite der Betätigungsscheibe 4 gelagert. Eine Lagermulde 31 ist in der Innenfläche der Abdeckplatte 3 vorgesehen, in welche die Betätigungsscheibe 4 eingelassen ist. Damit die Betätigungsscheibe 4 bewegbar ist, sind Abstandhalterzapfen 25 vorgesehen, welche in Bohrungen 34 einsteckbar sind. Die Abdeckplatte 3 weist eine zentrische Zuführbohrung 32 auf, durch welche das Litzenkabel im Endlosbetrieb zugeführt wird. Im zusammengebauten Zustand gemäss Figur 4a und Figur 4b ergibt sich ein sandwich-artiger Aufbau, wobei die Betätigungsscheibe 4 von der Abdeckplatte 3 oben und von der Bodenplatte 2 unten abgedeckt ist.

Zur Kompaktierung eines Abschnittes eines Litzenkabels wird das Litzenkabel durch die Zuführbohrung 32 in Richtung der Längsachse des Litzenkabels durch die Abdeckplatte 3, den Kompaktierraum 12 in der Betätigungsscheibe 4 querend und durch die Abführbohrung 22 der Bodenplatte 2 austretend durch die Kompaktiervorrichtung 1 geführt. Das Litzenkabel wird soweit eingeführt, bis der gewünschte abisolierte Abschnitt innerhalb des Kompaktierraumes 12 liegt. Durch einen Betätigungsarm 5, welcher mit Befestigungsmitteln 50 mit der Betätigungsscheibe 4 wirkverbunden ist, wird der rechteckige Querschnitt des Kompaktierraum 12 verkleinert, wobei die Querschnittsfläche 120 des Kompaktierraumes 12 zu jeder Zeit quadratisch ist.

Nachdem die Querschnittsfläche 120 und damit der Querschnitt des eingeführten Litzenkabels auf einen minimal möglichen Wert durch das mechanische Verpressen der Kompaktierbacken 8, 9, 10, 11 reduziert wurde, wird ein elektrischer Stromimpuls von der ersten Kompaktierbacke 8 den Abschnitt des Litzenkabels im Kompaktierraum 12 querend bis zur zweiten Kompaktierbacke 9 geführt. Dieser elektrische Stromimpuls führt zu einer elektrischen Verschweissung und damit zu einer stoffschlüssigen unlösbaren Verbindung der einzelnen Litzen des Litzenkabels.

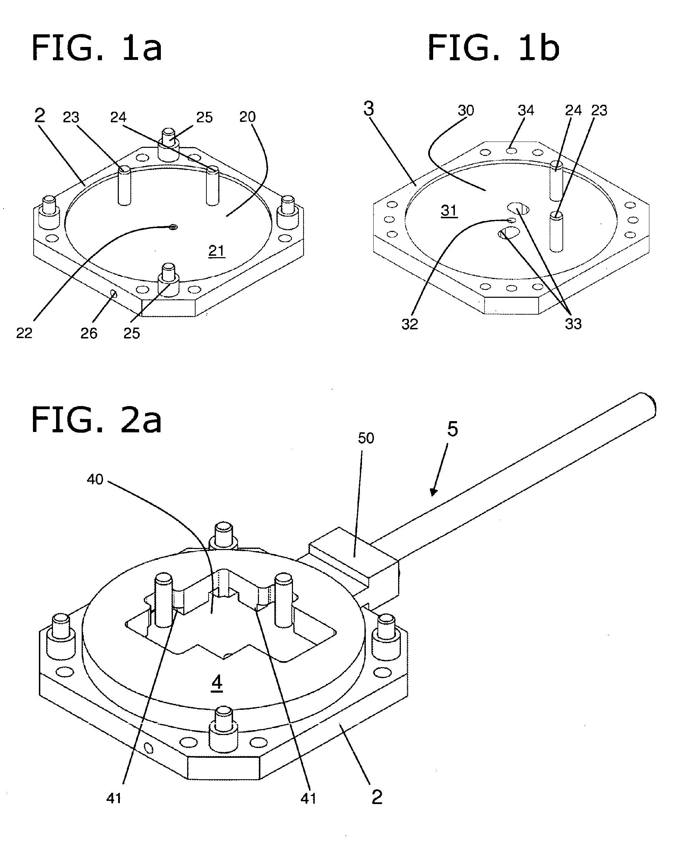

Um eine elektrische Spannung an die erste und die zweite Kompaktierbacke 8, 9 anzulegen, ist eine erste elektrische Zuführung 80 und eine zweite elektrische Zuführung 90 vorgesehen, welche elektrisch leitend mit den jeweiligen Kompaktierbacken 8, 9 verbunden sind. Damit die erste elektrische Zuführung 80 und die zweite elektrische Zuführung 90 der Bewegung der Kompaktierbacken folgen können, sind Elektrodenaussparungen 33 in der Abdeckplatte 3 ausgespart, wie in Figur 1b ersichtlich.

Damit kein ungewollter Kurzschlussstrom auftreten kann, muss mindestens eine der Kompaktierbacken 8, 9 gegen die Betätigungsscheibe 4, die Schieberelemente 6, 7 und die nicht mit elektrischen Zuführung verbundenen Kompaktierbacken 10, 11 elektrisch isolierend aufgebaut sein. Wie in Figur 5 und 6 angedeutet, sind in einer bevorzugten Ausführungsform die erste Kompaktierbacke 8 und die zweite Kompaktierbacke 9 isolierend gegen einander in das erste und das zweite Schieberelement 6, 7 eingelassen. Zur Isolation können beispielsweise keramische Beschichtungen verwendet werden, welche eine genügende Härte aufweisen, damit das mechanische Verpressen durchführbar ist und trotzdem elektrische Isolation gewährleistet ist.

Der oben beschriebene zwangsgekoppelte Wirkmechanismus des ersten und zweiten Schieberelementes 6, 7 führt zu einer gleichzeitig ausgeführten und gleichförmigen Bewegung der Schieberelemente 6, 7, wodurch die erste, die zweite und die dritte Kompaktierbacke 8, 9, 10 in Richtung der zentrischen virtuellen Drehachse der Kompaktiervorrichtung 1 geführt werden. Daraus resultierend wird zu jeder Zeit ein Kompaktierraum 12 mit quadratischer Querschnittsfläche 120 erreicht.

In weiteren Ausführungsformen könnten die erste Kompaktierbacke 8 an das erste Schieberelement 6 und/oder die zweite Kompaktierbacke 9 an das zweite Schieberelement 7 und/oder die vierte Kompaktierbacke 11 an die Betätigungsscheibe 4 angeformt sein. Da es bei einer Vielzahl von Kompaktiervorgängen aber zu Abnutzungserscheinungen der mit dem Litzenkabel in Kontakt befindlichen Kompaktierbacken 8, 9, 10, 11 kommt, ist es vorteilhaft die Teile auswechselbar zu gestalten, welche einer mechanischen Abnutzung unterliegen.

Die Durchführung der Kompaktierung von mittleren Abschnitten eines Litzenkabels kann im Endlosverfahren durchgeführt werden. Dabei wird mit bekannten Mitteln zuerst die isolierende Ummantelung des zu kompaktierenden Litzenkabels an gewünschten Abschnitten entfernt. Anschliessend wird das Litzenkabel in Richtung der Längsachse des Litzenkabels die Kompaktiervorrichtung 1 querend durch den Kompaktierraum 12 eingeführt. Danach wird das mechanische Verpressen des Abschnittes des Litzenkabels durchgeführt, wobei aufgrund der beschriebenen Vorrichtung eine Kompaktierung mit stets stets quadratischer Querschnittsfläches 120 des Kompaktierraumes 12 durchgeführt wird, wobei ein gepresstes Litzenkabel mit quadratischem Querschnitt resultiert. Wenn die Kompaktierbacken 8, 9, 10, 11 den Abschnitt des Litzenkabels fest umschliessen, wird der Stromimpuls zur elektrischen Verschweissung der einzelnen Litzen durchgeführt.

Nach dem Kompaktieren wird das kompaktierte Litzenkabel aus der Kompaktiervorrichtung 1 heraus geführt und ausserhalb der Kompaktiervorrichtung 1 auf gewünschte Längen abgelängt.

Aufgrund des Aufbaus der Kompaktiervorrichtung ist eine Durchschub durch die Kompaktiervorrichtung endlos möglich, wobei lediglich die Querschnittsfläche 120 des Kompaktierraumes 12 so vergrössert werden muss, dass das Litzenkabel weiter durch die Kompaktiervorrichtung führbar ist.

Die Bedienung der beschriebenen Kompaktiervorrichtung 1 kann manuell, bevorzugt aber durch einen elektrischen, einen elektromechanischen, oder einen pneumatischen Antrieb bewerkstelligt werden. Mit der oben beschriebenen Vorrichtung ist ein Endlosbetrieb mit hohem Durchsatz möglich. Damit die Kompaktiervorrichtung 1 nicht überhitzt, sind Kühlbohrungen 26 vorgesehen, welche die Bodenplatte 2 und/oder die Abdeckplatte 3 queren. Als wärmeabführende Kühlmittel wird beispielsweise Wasser benutzt, welches in die Kühlbohrungen 26, welche Kanäle in der Bodenplatte 2 und der Abdeckplatte 3 bilden, eingeleitet werden.

### Bezugszeichenliste

- 1: Kompaktiervorrichtung
- 2: Bodenplatte
20 Innenseite der Bodenplatte
21 Lagermulde in der Bodenplatte
22 Abführbohrung
23 erster Schwenkzapfen
24 zweiter Schwenkzapfen
25 Abstandhalterzapfen
26 Kühlbohrung
- 3: Abdeckplatte
30 Innenseite der Abdeckplatte
31 Lagermulde in der Abdeckplatte
32 Zuführbohrung
33 Elektrodenaussparung
34 Abstandshalterbohrung
- 4: Betätigungsscheibe
40 Scheibenaussparung
41 Führungsmittel (angeformt)
- 5: Betätigungsarm
50 Befestigungsmittel
- 6: Erstes Schieberelement
60 erste Aussparung (für erste Kompaktierbacke)
61 erste Bohrung (für ersten Schwenkzapfen)
62 zweite Aussparung (für erste Führungsmittel)
- 7: Zweites Schieberelement
70 dritte Aussparung (für zweite und dritte Kompaktierbacke)
71 zweite Bohrung (für zweiten Schwenkzapfen)
72 Aussparung für zweite Führungsmittel
- 8: Erste Kompaktierbacke 80 erste elektrische Zuführung
- 9: Zweite Kompaktierbacke 90 zweite elektrische Zuführung
- 10: Dritte Kompaktierbacke
- 11: Vierte Kompaktierbacke
- 12: Kompaktierraum 120 Querschnittsfläche

## Patentansprüche

1. Kompaktiervorrichtung (1) zum Kompaktieren von Abschnitten von Litzenkabeln, umfassend
eine erste Kompaktierbacke (8), eine zweite Kompaktierbacke (9), eine dritte Kompaktierbacke (10) und eine vierte Kompaktierbacke (11), deren Aussenflächen Innenflächen eines Kompaktierraumes (12) bilden, wobei der Abschnitt eines Litzenkabels in den Kompaktierraum (12) einbringbar ist, **dadurch gekennzeichnet, dass**
die Kompaktiervorrichtung (1)
eine Bodenplatte (2) mit einer mindestens annähernd zentrischen Abführbohrung (22), umfassend einen ersten Schwenkzapfen (23) und einen zweiten Schwenkzapfen (24), welche senkrecht von der Bodenplatte (2) wegragend ortsfest mit der Bodenplatte (2) verbunden sind, aufweist, wobei eine auf der Bodenplatte (2) um eine zentrische virtuelle Drehachse schwenkbar gelagerte Betätigungsscheibe (4) mit einer Scheibenaussparung (40) und der vierten Kompaktierbacke (11) und
eine die Betätigungsscheibe (4) abdeckende, mit der Bodenplatte (2) lösbar verbundene Abdeckplatte (3) mit einer mindestens annähernd zentrischen Zuführbohrung (32) umfasst, sodass Litzenkabel durch die Abführ- und Zuführbohrung (22, 32) in den Kompaktierraum (12) führbar sind,
wobei durch das Verschwenken der Betätigungsscheibe (4) ein auf dem ersten Schwenkzapfen (23) in der Scheibenaussparung (40) schwenkbar gelagertes erstes Schieberelement (6) mit der ersten Kompaktierbacke (8) und ein auf dem zweiten Schwenkzapfen (24) in der Scheibenaussparung (40) schwenkbar gelagertes zweites Schieberelement (7) mit der zweiten Kompaktierbacke (9) und der dritten in der Scheibenaussparung (40) bewegbar gelagerten Kompaktierbacke (10) in der Scheibenaussparung (40) zwangsgeführt bewegbar ist, wobei die Scheibenaussparung (40) Führungsmittel (41) umfasst, welche mit einer zweiten Aussparung (62) des ersten Schieberelementes (6) und einer vierten Aussparung (72) des zweiten Schieberelementes (7) zusammenwirken, wodurch die Querschnittsfläche (120) des Kompaktierraums (12) zu jeder Zeit quadratisch bleibend variierbar ist.

2. Kompaktiervorrichtung (1) nach Anspruch 1, **dadurch gekennzeichnet, dass** die erste Kompaktierbacke (8) auswechselbar in einer ersten Aussparung (60) im ersten Schieberelement (6) gelagert ist.

3. Kompaktiervorrichtung (1) nach Anspruch 1, **dadurch gekennzeichnet, dass** die zweite Kompaktierbacke (9), auswechselbar in der dritten Aussparung (70) des zweiten Schieberelements (7) gehalten ist.

4. Kompaktiervorrichtung (1) nach Anspruch 1, **dadurch gekennzeichnet, dass** die vierte Kompaktierbacke (11) in der Betätigungsscheibe (4) auswechselbar geklemmt gehalten ist.

5. Kompaktiervorrichtung (1) nach Anspruch 1,
**dadurch gekennzeichnet, dass** die dritte Kompaktierbacke (10) und die vierte Kompaktierbacke (11) aus elektrisch isolierendem Material hergestellt sind.

6. Kompaktiervorrichtung (1) nach Anspruch 1, **dadurch gekennzeichnet, dass** die erste Kompaktierbacke (8) und die zweite Kompaktierbacke (9) elektrisch isolierend gegeneinander und die übrigen Bestandteile der Kompaktiervorrichtung (1) im ersten Schieberelement (6) und im zweiten Schieberelement (7) gehalten sind.

7. Kompaktiervorrichtung (1) nach Anspruch 5, **dadurch gekennzeichnet, dass** die erste Kompaktierbacke (8) elektrisch leitfähig und mit einer ersten elektrischen Zuführung (80) versehen ist und die zweite Kompaktierbacke (9) elektrisch leitfähig und mit einer zweiten elektrischen Zuführung (90) versehen ist.

8. Kompaktiervorrichtung (1) nach Anspruch 1, **dadurch gekennzeichnet, dass** einen Betätigungsarm (5) an der Betätigungsscheibe (4) befestigt ist.

9. Kompaktiervorrichtung (1) nach Anspruch 8, **dadurch gekennzeichnet, dass** der Betätigungsarm (5) manuell, bevorzugt aber durch einen elektrischen, einen elektromechanischen, oder einen pneumatischen Antrieb betätigbar ist.

10. Kompaktiervorrichtung (1) nach Anspruch 1,
**dadurch gekennzeichnet, dass** das Litzenkabel in Längsrichtung des Litzenkabels den Kompaktierraum (12) diametral quert.

11. Kompaktiervorrichtung (1) nach Anspruch 1,
**dadurch gekennzeichnet, dass** die Betätigungsscheibe (4) in eine Lagermulde (21) auf der Innenseite (20) der Bodenplatte (2) eingelassen gelagert ist.

## Claims

1. Compacting device (1) for compacting portions of stranded wire cables,
comprising a first compacting jaw (8), a second compacting jaw (9), a third compacting jaw (10) and a fourth compacting jaw (11), the outer surfaces thereof forming inner surfaces of a compacting chamber (12), the portion of a stranded wire cable being able to be inserted into the compacting chamber (12),
**characterised in that** the compacting device (1) comprises a base plate (2) with an at least approximately central outlet bore (22) comprising a first pivot pin (23) and a second pivot pin (24) which are fixedly connected to the base plate (2) and protrude perpendicularly from the base plate (2), an actuating disc (4) with a disc recess (40) and the fourth compacting jaw (11) mounted pivotably on the base plate (2) about a central virtual rotational axis and
comprises a cover plate (3) covering the actuating disc (4) and releasably connected to the base plate (2) and with an at least approximately central inlet bore (32), so that stranded wire cables may be passed through the outlet bore and inlet bore (22, 32) into the compacting chamber (12),
a first sliding element (6) with the first compacting jaw (8) pivotably mounted on the first pivot pin (23) in the disc recess (40), and a second sliding element (7) with the second compacting jaw (9) pivotably mounted on the second pivot pin (24) in the disc recess (40) and the third compacting jaw (10) movably mounted in the disc recess (40) being forcibly guided in the disc recess (40) by the pivoting of the actuating disc (4), the disc recess (40) comprising guide means (41) which cooperate with a second recess (62) of the first sliding element (6) and a fourth recess (72) of the second sliding element (7), whereby the cross-sectional surface (120) of the compacting chamber (12) may be varied but always remains square.

2. Compacting device (1) according to Claim 1, **characterised in that** the first compacting jaw (8) is mounted in a first recess (60) in the first sliding element (6) in such a manner that it may be changed.

3. Compacting device (1) according to Claim 1, **characterised in that** the second compacting jaw (9) is held in the third recess (70) of the second sliding element (7) in such a manner that it may be changed.

4. Compacting device (1) according to Claim 1, **characterised in that** the fourth compacting jaw (11) is clampingly held in the actuating disc (4) in such a manner that it may be changed.

5. Compacting device (1) according to Claim 1, **characterised in that** the third compacting jaw (10) and the fourth compacting jaw (11) are produced from electrically insulating material.

6. Compacting device (1) according to Claim 1, **characterised in that** the first compacting jaw (8) and the second compacting jaw (9) are held in an electrically insulating manner relative to one another and the remaining components of the compacting device (1) are held in the first sliding element (6) and in the second sliding element (7).

7. Compacting device (1) according to Claim 5, **characterised in that** the first compacting jaw (8) is electrically conductive and provided with a first electrical lead (80) and the second compacting jaw (9) is electrically conductive and provided with a second electrical lead (90).

8. Compacting device (1) according to Claim 1, **characterised in that** an actuating arm (5) is fastened to the actuating disc (4).

9. Compacting device (1) according to Claim 8, **characterised in that** the actuating arm (5) may be actuated manually, but preferably by an electrical, an electromechanical or a pneumatic drive.

10. Compacting device (1) according to Claim 1, **characterised in that** the stranded wire cable traverses the compacting chamber (12) diametrically in the longitudinal direction of the stranded wire cable.

11. Compacting device (1) according to Claim 1, **characterised in that** the actuating disc (4) is mounted recessed in a bearing cavity (21) on the inside (20) of the base plate (2).

## Revendications

1. Dispositif de compactage (1) pour compacter des tronçons de câbles toronnés comprenant
une première mâchoire de compactage (8), une seconde mâchoire de compactage (9), une troisième mâchoire de compactage (10) et une quatrième mâchoire de compactage (11), dont les surfaces extérieures forment les surfaces intérieures d'un espace de compactage (12), le tronçon d'un câble toronné pouvant être introduit dans l'espace de compactage (12),
**caractérisé en ce que**
le dispositif de compactage (1) présente une plaque de fond (2) avec un perçage d'évacuation (22) au moins approximativement centré, comprenant un premier tenon de pivotement (23) et un second tenon de pivotement (24), qui dépassent à la perpendiculaire de la plaque de fond (2) et sont reliés fixement à la plaque de fond (2), lequel dispositif comprend un disque d'actionnement (4) monté sur la plaque de fond (2) de façon à pouvoir basculer autour d'un axe de rotation virtuel centré avec un évidement de disque (40) et la quatrième mâchoire de compactage (11) et
comprend une plaque de recouvrement (3) recouvrant le disque d'actionnement (4) et reliée de façon amovible à la plaque de fond (2), avec un perçage d'arrivée (32) au moins approximativement centré, de sorte que des câbles toronnés peuvent être guidés à travers les perçages d'évacuation et d'arrivée (22, 32) dans l'espace de compactage (12),
un premier élément coulisseau (6), monté de façon basculante sur le premier tenon de pivotement (23) dans l'évidement de disque (40), avec la première mâchoire de compactage (8) et un second élément coulisseau (7), monté de façon basculante sur le second tenon de pivotement (24) dans l'évidement de disque (40), avec la seconde mâchoire de compactage (9) et la troisième mâchoire de compactage (10) montée de façon amovible dans l'évidement de disque (40) pouvant être déplacés avec un guidage forcé dans l'évidement de disque (40) par le basculement du disque d'actionnement (4), l'évidement de disque (40) comprenant des moyens de guidage (41) qui coopèrent avec un second évidement (62) du premier élément coulisseau (6) et un quatrième évidement (72) du second élément coulisseau (7), de sorte que la surface de section (120) de l'espace de compactage (12) peut être modifiée à tout moment en restant carrée.

2. Dispositif de compactage (1) selon la revendication 1, **caractérisé en ce que** la première mâchoire de compactage (8) est montée de façon amovible dans un premier évidement (60) dans le premier élément coulisseau (6).

3. Dispositif de compactage (1) selon la revendication 1, **caractérisé en ce que** la seconde mâchoire de compactage (9) est maintenue de façon amovible dans le troisième évidement (70) du second élément coulisseau (7).

4. Dispositif de compactage (1) selon la revendication 1, **caractérisé en ce que** la quatrième mâchoire de compactage (11) est maintenue serrée de façon amovible dans le disque d'actionnement (4).

5. Dispositif de compactage (1) selon la revendication 1, **caractérisé en ce que** la troisième mâchoire de compactage (10) et la quatrième mâchoire de compactage (11) sont fabriquées à base de matériau électro-isolant.

6. Dispositif de compactage (1) selon la revendication 1, **caractérisé en ce que** la première mâchoire de compactage (8) et la seconde mâchoire de compactage (9) sont montées de façon électro-isolante l'une par rapport à l'autre et les autres composants du dispositif de compactage (1) sont montés dans le premier élément coulisseau (6) et dans le second élément coulisseau (7).

7. Dispositif de compactage (1) selon la revendication 5, **caractérisé en ce que** la première mâchoire de compactage (8) est électriquement conductrice et dotée d'une première arrivée électrique (80) et la seconde mâchoire de compactage (9) est électriquement conductrice et dotée d'une seconde arrivée (90) électrique.

8. Dispositif de compactage (1) selon la revendication 1, **caractérisé en ce qu'**un bras d'actionnement (5) est fixé sur le disque d'actionnement (4).

9. Dispositif de compactage (1) selon la revendication 8, **caractérisé en ce que** le bras d'actionnement (5) peut être actionné de façon manuellement, mais de préférence par un entraînement électrique, un entraînement électromécanique ou un entraînement pneumatique.

10. Dispositif de compactage (1) selon la revendication 1, **caractérisé en ce que** le câble toronné traverse diamétralement l'espace de compactage (12) dans le sens longitudinal du câble toronné.

11. Dispositif de compactage (1) selon la revendication 1, **caractérisé en ce que** le disque d'actionnement (4) est monté de façon emboîtée dans une cavité de palier (21) sur le côté intérieur (20) de la plaque de fond (2).
